(19) Europäisches Patentamt
European Patent Office
Office européen des brevets

(11) **EP 2 720 359 A2**

## (12) EUROPEAN PATENT APPLICATION

(43) Date of publication:
16.04.2014 Bulletin 2014/16

(51) Int Cl.:
*H02M 3/00* (2006.01)

(21) Application number: 13186605.5

(22) Date of filing: 30.09.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 10.10.2012 US 201261712151 P
11.03.2013 US 201313793736

(71) Applicant: **Semtech Corporation**
**Camarillo, CA 93012 (US)**

(72) Inventor: **Aebischer Daniel**
**Marin-Epagnier (CH)**

(74) Representative: **Grünecker, Kinkeldey,**
**Stockmair & Schwanhäusser**
**Leopoldstrasse 4**
**80802 München (DE)**

(54) **Reduction or elimination of irregular voltage distribution in a ladder of voltage elevators**

(57) The voltage distribution in a cascade or ladder of voltage elevator cells may become irregular in certain conditions. In such conditions, one or more cells may become overstressed. Corrective circuitry may be added to one or more of the voltage elevator cells to reduce or eliminate such stresses. Such corrective circuitry may include a capacitor, a long-channel PMOS transistor, both a capacitor and a long-channel PMOS transistor in parallel, or other electrically equivalent components coupled in parallel with the input and output node of one or more of the voltage elevator cells.

FIG. 3

**Description**

CROSS-REFERENCE TO RELATED APPLICATION

This application claims the benefit of U.S. Provisional Application No. 61/712,151, filed October 10, 2012.

FIELD OF INVENTION

This invention relates to microelectronics and semiconductor circuitry. More specifically, the invention relates to charge pump voltage multipliers. Even more specifically, the invention relates to the reduction of negative effects of overstressing cells through uneven voltage distribution in ladders of voltage multiplier cells.

BACKGROUND OF THE INVENTION

Cross-coupled MOS inverter cells, driven by capacitively-coupled complementary clock signals are efficient building blocks in charge-pumps. These cells may be used to elevate an input DC voltage to a higher voltage output level. The cells may also be used to reduce an input DC voltage to a lower voltage output level. A positive input DC voltage may optionally be reduced to an output level below zero volts.

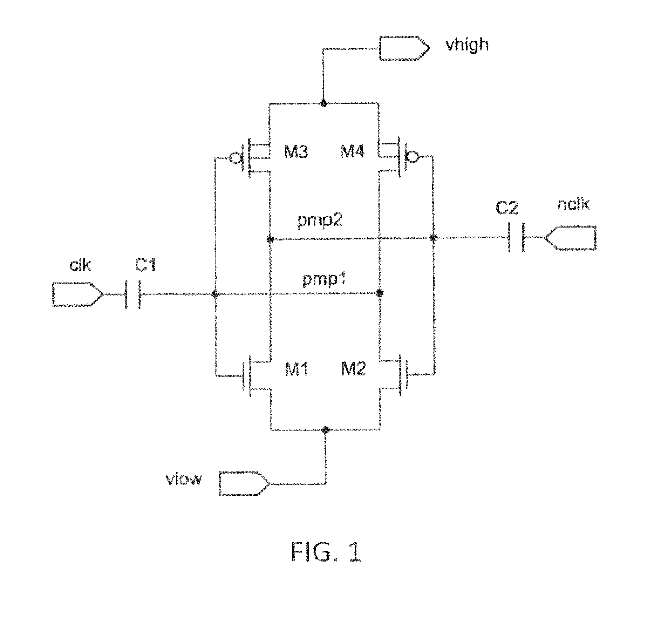

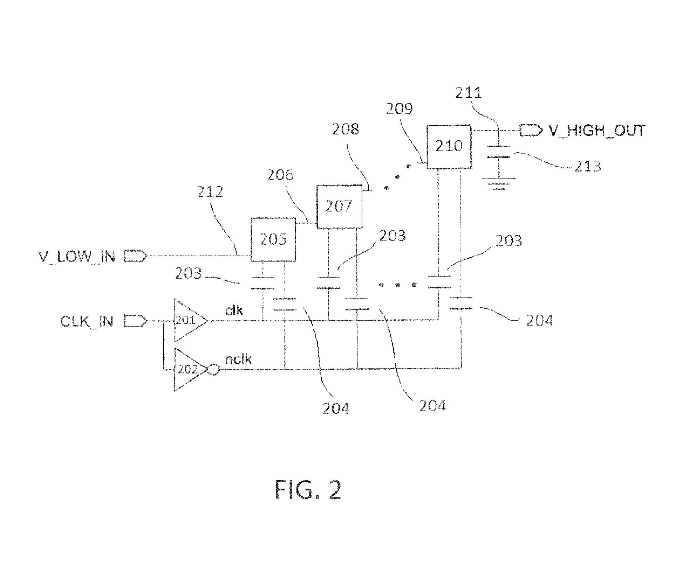

Known applications of these cells are proposed in P. Favrat, P. Deval, M.J. Declercq, "A High-Efficiency CMOS Voltage Doubler," IEEE Journal of Solid-State Circuits, Vol. 33, No. 3, March 1998, and R. Pelliconi et al., "Power Efficient Charge Pump in Deep Submicron Standard CMOS Technology," Proc. 27 ESSCIRC, 2001. As illustrated in FIG. 1, which is an alternative illustration of Pelliconi's Figure 1 or portions of Figure 2 of J. Cha, "Analysis and Design Techniques of CMOS Charge-Pump-Based Radio-Frequency Antenna-Switch Controllers, IEEE Trans. On Circuits and Systems - I: Regular Papers, Vol. 56, No. 5, May 2009, these disclosures describe a dual-bucket cell that may act as a voltage doubler.

As illustrated in FIG. 1,herein, an input voltage Vlow is input to two MOSFET inverters. The first inverter comprises NMOS transistor M1 and PMOS transistor M3, while the second inverter comprises NMOS transistor M2 and PMOS transistor M4. Both inverters' outputs are coupled to output voltage Vhigh. A clock signal clk is coupled via capacitor C1 to the gates of M1 and M3, and the drains of M2 and M4. Circuitry for generating a clock signal is not illustrated herein, but many circuits for generating clock signals are well-known to those of ordinary skill in the art. The inverse of clock signal clk is represented as inverted clock signal nclk, which is low when clk is high and vice-versa. Circuitry for generating signal nclk is not illustrated, but is well-known in the art. The inverted clock signal nclk is coupled via capacitor C2 to the gates of M2 and M4 and the drains of M1 and M3. One of ordinary skill in the art will recognize the manner in which the circuitry illustrated in FIG. 1 may output a higher voltage at node Vhigh than is input at node Vlow.

A dual-bucket cell, for example of the type illustrated in FIG. 1, may be cascaded into multiple stages to obtain an output voltage that is a higher multiple of the input voltage by electrically connecting the output Vhigh of one cell to the input Vlow of a second cell. This may be repeated any number of times provided that the circuitry is capable of handling the input and output voltage levels. An exemplary arrangement of this type is described in R. Pelliconi et al., "Power Efficient Charge Pump in Deep Submicron Standard CMOS Technology," Proc. 27 ESSCIRC, 2001.

FIG. 2 sets forth an example of cascaded dual-bucket cells that may be used for voltage elevation. As illustrated in FIG. 2, each of cells 205, 207, 210 and any number of intermediate cells represented by ellipses (...) may be cascaded. Each of cells 205, 207, 210, and any intermediate cells may be configured in the manner of the circuitry illustrated in FIG. 1. Input voltage V_LOW_IN is input into node 212, which corresponds to Vlow. Cell 205 receives the input at node 212 and outputs a higher voltage at node 206, which corresponds to Vhigh. Node 206 is coupled to the input Vlow of cell 207. Cell 207 receives the input at node 206 and outputs a higher voltage at node 208, which corresponds to Vhigh. Node 208 may be coupled to node 209 or, alternatively, to the input of an intermediate cell. Node 209 is coupled to the output voltage of the preceding cell and corresponds to Vlow for cell 210. Cell 210 receives the input at node 209 and outputs a higher voltage at node 211, which corresponds to Vhigh. Alternatively, as set forth above, any or all of the cells in the cascade may be configured to output a voltage that is lower than the input voltage. Thus, the labels V_LOW_IN and V_HIGH_OUT are representative of a typical use, but V_LOW_IN may actually be a higher voltage than V_HIGH_OUT.

A clock input signal CLK_IN is preferably provided to amplifiers 201, 202. Amplifier 201 outputs amplified clock signal clk to each of cells 205, 207, 210, and any intermediate nodes (...) via capacitors 203. Amplifier 202 outputs inverted clock signal nclk to each of cells 205, 207, 210, and any intermediate nodes (...) via capacitors 204. Capacitors 203 and 204 are not illustrated herein for intermediate nodes (...), but, if used, will be connected in the same fashion as those illustrated with respect to cells 205, 207, 210. That is, capacitor 203 for any intermediate nodes (...) will be connected between signal clk and the node. And capacitor 204 for any intermediate nodes (...) will be connected between signal nclk and the node.

Node 211 provides output voltage V_HIGH_OUT from cell 210. Node 211 is preferably coupled to ground via capacitor 213.

Cascaded cells of the type illustrated in FIG. 2 may be used to provide a much high multiple of the input voltage than single cells of the type illustrated in FIG. 1. The cascaded circuit of FIG. 2 eliminates at least one of the drawbacks of a Dickson charge pump, in that it does not result in voltage drops across the diodes that are present in Dickson charge pumps.

Assuming that the transistors illustrated in FIG. 1 have a high breakdown voltage in the N-well (or the deep N-well) in relation to that of the P substrate, the gate-drain and gate-source voltages of the isolated CMOS transistors in each cell will be subject to only the local voltage difference (within the cell) between Vhigh and Vlow of that cell. This voltage difference is directly related to the power supply voltage of the clock buffers. For this reason, the gates may be made of a thin oxide. This thin oxide gate allows for a more compact component size and higher efficiency for any given on-resistance of each component. As taught by M.D. Ker, S.L. Chen, C.S. Tsai, "Design of Charge Pump Circuit With Consideration of Gate-Oxide Reliability in Low-Voltage CMOS processes," IEEE Journal of Solid-State Circuits, Vol. 41, No. 5, May 2006, this type of thin oxide gate structure is not expected to suffer gate-oxide reliability problems.

However, in a cascading structure (also known as a "ladder" structure) of the type illustrated in FIG. 2, there is a risk of unequal voltage distributions across the cells 205, 207, 210, and any intermediate cells (...). In a ladder structure with an unequal voltage distribution, one or more cells may be subject to a much higher voltage difference than the anticipated local voltage difference that is directly related to the power supply voltage of the clock buffers and is preferably relatively constant across the cells despite the relative change in voltage between V_HIGH_OUT and V_LOW_IN. It is anticipated and preferable that the voltage difference across each cell will be close to the mean voltage difference, where the mean voltage difference is given by the following equation 1:

$$\text{Mean voltage difference} = (V\_HIGH\_OUT - V\_LOW\_IN)/\text{number of cells} \quad \text{(Equation 1)}$$

Subjecting any of the cells to a voltage difference that is significantly higher than the mean voltage difference may result in degradation or destruction of the cell by oxide breakdown or accelerated aging. Such degradation or destruction is undesirable in industrial products and many other products, which are expected to function over extended periods of time and over extended usage.

In a first problematic situation, unequal voltage distribution can be seen when a device's clock is paused (for example, to reduce power consumption) at the same time that the output voltage V_HIGH_OUT is maintained at a high level due to its decoupling capacitor. In this type of situation, unequal leakage currents on the different nodes of the ladder structure can be expected due to the seemingly random nature of micro-imperfections in the device. Unequal leakage currents can cause differing voltage drifts in the various intermediate nodes of the ladder structure. It is an object of this invention to reduce or eliminate this problem.

In a second problematic situation, unequal voltage distribution can also be seen when a device's clock is active and the clock's amplitude is marginally small or inadequate with respect to the voltage of an individual cell. This situation may, for example, arise after the clock is paused as described in the previous paragraph. Alternatively, the situation may, for example, arise after the output load current or output voltage is varied in a relatively fast manner. In such a circumstance, the cross-coupled inverters in at least one of the cells may not be able to switch states. As a consequence of this inability to switch states, the complementary clock pulses can be transmitted through the capacitors and create square waveforms on the intermediate nodes - a condition that is undesirable. This improper operation may propagate to neighboring cells. As a result of such propagation, one or more cells may encounter a transient overvoltage. This transient overvoltage will occur, for example, in situations where the output voltage at V_HIGH_OUT is maintained at a high level due to the effect of the decoupling capacitor. It is an object of this invention to reduce or eliminate this problem.

SUMMARY OF THE INVENTION

The present invention reduces or eliminates the identified problems by providing novel circuitry and modes of operation for use with cascaded voltage elevation cells. The present invention reduces or eliminates these problems by providing for coupling a corrective circuitry to nodes vlow and vhigh in parallel to a cell within the cascaded structure.

In one embodiment, the corrective circuitry may be a long-channel PMOS transistor. This type of corrective circuitry is useful in reducing or eliminating the unequal voltage distribution encountered in the first problematic situation described above.

In another embodiment, the corrective circuitry may be a capacitor. This type of corrective circuitry is useful in reducing or eliminating the unequal voltage distribution encountered in the second problematic situation described above.

In yet another embodiment, the corrective circuitry may be a long-channel PMOS transistor coupled in parallel with a capacitor. This type of corrective circuitry is useful in reducing or eliminating the unequal voltage distribution encountered in either the first problematic situation or the second problematic situation described above.

Though the present invention is described in the context of cross-coupled MOS inverter cells, one of ordinary skill in the art will recognize that the scope of the invention extends beyond such cells to other types of cells that encounter the identified problems.

BRIEF DESCRIPTION OF THE DRAWINGS

The above and other objects and advantages of the present invention will be apparent upon consideration of the following detailed description, taken in conjunction with the accompanying drawings, in which like reference characters refer to like parts throughout, and in which:

FIG. 1 illustrates prior art circuitry for a dual-bucket cell voltage elevator.
FIG. 2 illustrates prior art circuitry for cascaded dual-bucket cells for voltage elevation.
FIG. 3 illustrates exemplary corrective circuitry according to the present invention.
FIG. 4 illustrates exemplary corrective circuitry according to the present invention.
FIG. 5 illustrates exemplary corrective circuitry according to the present invention.

DETAILED DESCRIPTION OF THE INVENTION

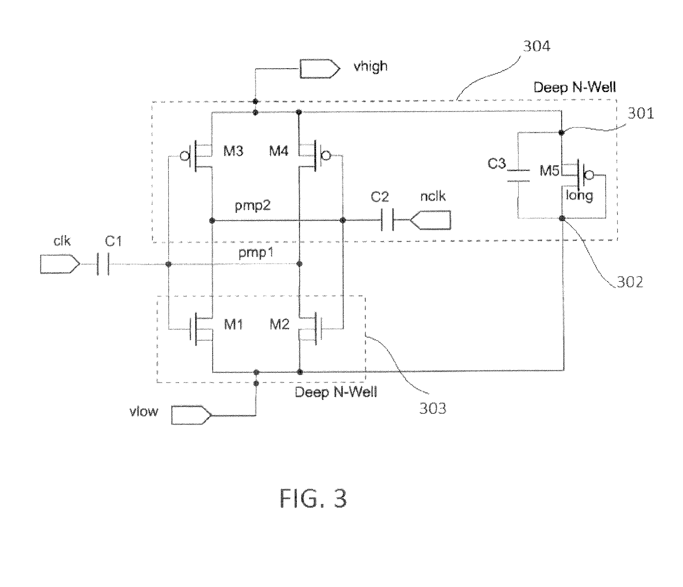

FIG. 3 illustrates an exemplary embodiment of the present invention, including corrective circuitry electronically coupled between nodes 301 and 302 to a voltage multiplier cell at its input vlow and output vhigh. As illustrated in FIG. 3, the corrective circuitry comprises capacitor C3 coupled in parallel with a long-channel PMOS transistor M5. One terminal of capacitor C3 is coupled to node 301, while the other terminal of capacitor C3 is coupled to node 302. The drain of transistor M5 is coupled to node 302, while the source is coupled to node 301. The gate of transistor M5 is electronically coupled to both the drain and node 302. With respect to vhigh and vlow, the corrective circuitry is in turn coupled in parallel to the voltage multiplier cell that comprises transistors M1, M2, M3, and M4. As illustrated, each of transistors M1, M2, M3, M4 and M5, as well as capacitor C3, may be and are preferably formed in deep N-well regions 303, 304.

The long-channel PMOS transistor M5 may be useful in reducing or eliminating the unequal voltage distribution encountered in at least the first problematic situation described above. The transistor M5 is preferably formed with an equivalent impedance that remains high enough during operation such that M5 will not overly-shorten the voltage multiplier cell and thereby render the cell overly inefficient. One of ordinary skill in the art will recognize that numerous variations in the formation of the voltage multiplier cell and transistor M5, as well as differing desirable efficiency levels coupled with differing desired performance of the transistor M5 will result in numerous variations in the desired equivalent impedance of transistor M5. Another consideration in forming transistor M5 is that current through M5 should preferably remain significantly above the maximum expected leakage current on nodes vlow and vhigh. Ensuring this current level will ensure the expected regular voltage drops throughout the complete ladder of cells, assuming that each of the cells is formed with equivalent corrective circuitry. Notably, similar to the other CMOS devices within the cell, PMOS transistor M5 will only encounter the local voltage difference within the cell. Thus, transistor M5 may also be and is preferably formed using a relatively thin oxide layer. Another benefit of using the disclosed transistor M5 is that the non-linear characteristic of transistor M5 will help avoid overvoltage. Specitically, the stages with the highest voltage difference will be more strongly discharged by transistor M5.

The capacitor C3 is useful in reducing or eliminating the unequal voltage distribution encountered in at least the second problematic situation described above. To solve this type of second problematic situation, it is desirable to ensure that the clock signal is of sufficient amplitude. When the clock signal has been restored to sufficient amplitude, the remaining problem occurring due to relatively fast variation of the output load current or a output voltage may be solved by placing capacitor C3 in the circuit, coupled to vhigh via node 301 and vlow via node 302. The capacitor C3 preferably should be formed to ensure sufficient decoupling to assist with providing brief direct current flow through the inverters during switching. In this manner, capacitor C3 will ease the fast and complete switching of the cross-coupled inverters. As described above with respect to transistor M5, capacitor C3 will only encounter the relatively small local voltage difference within the cell. Thus, capacitor C3 may be efficiently implemented by a thin oxide MOS transistor. Because the amount of area used by the capacitor upon the semiconductor device will often be a concern, the capacitance of capacitor C3 can be relatively very low, resulting in a reduction of the area filled by the capacitor. Capacitor C3 will provide at least some useful effects even if its capacitance is lower than the capacitance of capacitor C1 and/or capacitor C2.

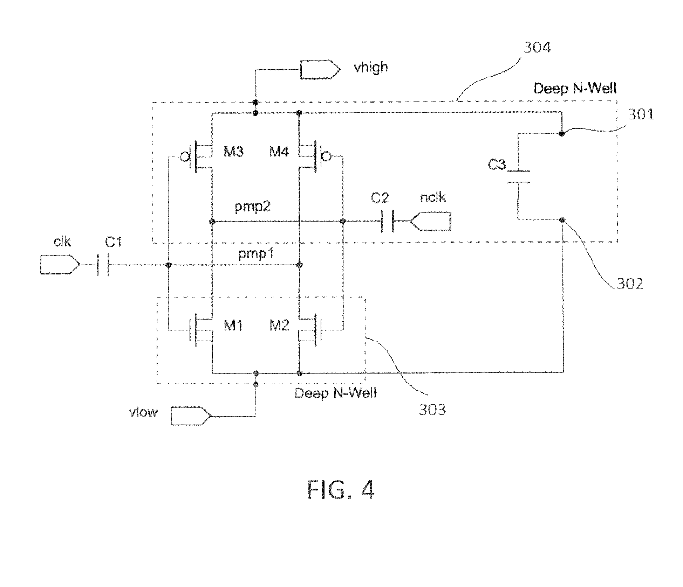

FIG. 4 illustrates an alternative embodiment of the invention useful in solving at least one of the encountered problematic situations. In this embodiment, capacitor C3 may be coupled between nodes 301 and 302, while transistor M5 is eliminated.

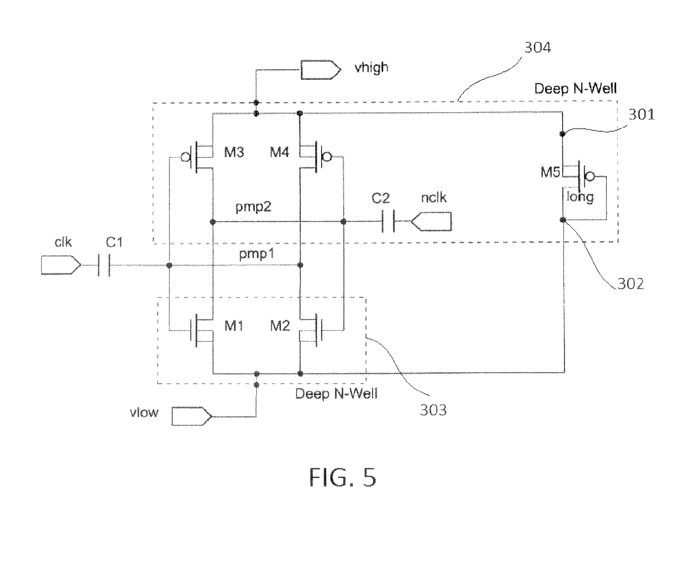

FIG. 5 illustrates yet another alternative embodiment of the invention useful in solving at least one of the encountered problematic situations. In this embodiment, transistor M5 is coupled between nodes 301 and 302, while capacitor C3 is eliminated.

Alternatively, it is possible to form the corrective circuitry with microelectrical devices that function similarly to a long-channel PMOS transistor with respect to the problem of irregular voltage distribution. For example depending upon the device composition and geometry, it may be desirable to replace long-channel PMOS transistor M5 with one or more of the following, which are contemplated by the present invention but are not explicitly illustrated, a long-channel NMOS transistor, resistors having high resistance, diodes, a plurality of NMOS transistors, a plurality of PMOS transistors, or other circuitry that ensures low levels of conductance between vhigh and vlow in any given voltage multiplier cell, such that the purposes of the long-channel PMOS transistor M5 are accomplished.

The corrective circuitry illustrated in FIGS. 3, 4, and 5, and further discussed above may be implemented in one, all, or any number or combination of cells within a cascaded circuit such as the cascaded circuit illustrated in FIG. 2. Implementation of the corrective circuitry will help to reduce or eliminate an unequal voltage distribution that may occur in the cell in which the corrective circuitry is implemented. Thus, if it is anticipated that unequal voltage distribution may occur in only a subset of cells, it may be useful to implement the corrective circuitry only in those cells.

**Claims**

1. A voltage multiplier cell comprising,
   an input node electrically coupled to a voltage multiplier circuit within the cell and configured to receive an input voltage;
   an output node electrically coupled to the circuit and configured to output an output voltage; and
   corrective circuitry electrically coupled to the input node and the output node in parallel with the circuit.

2. The cell of claim 1, wherein the corrective circuitry comprises,
   a capacitor electrically coupled to the output node and the input node; and
   a long-channel PMOS transistor having a drain and a gate both electrically coupled to the input node and further having a source electrically coupled to the output node.

3. The cell of claim 1, wherein the corrective circuitry comprises,
   a circuit element coupled to the input node and the output node;
   wherein the circuit element is chosen from the group consisting of long-channel NMOS transistor, resistor with high resistance, one or more diodes, a plurality of NMOS transistors, and a plurality of PMOS transistors.

4. A voltage multiplier comprising a plurality of voltage multiplier cells of claim 1, wherein the voltage multiplier circuit in each cell comprises at least two cross-coupled MOS inverters, and wherein the plurality of voltage multiplier cells are electrically coupled in series, such that with the exception of a first cell of the plurality of voltage multiplier cells, the input node of each of the plurality of voltage multiplier cells is electrically coupled to the output node of the immediately preceding voltage multiplier cell in the series

5. The voltage multiplier of claim 4, wherein the corrective circuitry of at least one voltage multiplier cell comprises,
   a capacitor electrically coupled to the output node and the input node; and
   a long-channel PMOS transistor having a drain and a gate both electrically coupled to the input node and further having a source electrically coupled to the output node.

6. The voltage multiplier of claim 4, wherein the corrective circuitry of at least one voltage multiplier cell comprises,
   a long-channel PMOS transistor having a drain and a gate both electrically coupled to the input node and further having a source electrically coupled to the output node.

7. The voltage multiplier of claim 4, wherein the corrective circuitry of at least one voltage multiplier cell comprises,
   a circuit element coupled to the input node and the output node;
   wherein the circuit element is chosen from the group consisting of long-channel NMOS transistor, resistor with high resistance, one or more diodes, a plurality of NMOS transistors, and a plurality of PMOS transistors.

8. The voltage multiplier of claim 4, wherein the corrective circuitry of each of the plurality of voltage multiplier cells is substantially similar to the corrective circuitry of the others of the plurality of voltage multiplier cells.

9. The voltage multiplier of claim 4, wherein the corrective circuitry of at least one of the plurality of voltage multiplier cells is substantially different than the corrective circuitry of at least one of the others of the plurality of voltage multiplier cells.

10. A method comprising,
providing a clock signal to a plurality of voltage multiplier cells, and
reducing an uneven voltage distribution in the plurality of voltage multiplier cells using corrective circuitry attached to an input node and an output node of at least one of the plurality of voltage multiplier cells.

11. The method of claim 10, wherein reducing an uneven voltage distribution comprises, discharging an overvoltage through at least one transistor, and
wherein the corrective circuitry attached to at least one of the plurality of voltage multiplier cells comprises the at least one transistor.

12. The method of claim 10, wherein reducing an uneven voltage distribution comprises,
providing brief direct current flow through at least one inverter of at least one of the plurality of voltage multiplier cells using at least one capacitor, and
wherein the corrective circuitry attached to the at least one of the plurality of voltage multiplier cells comprises the at least one capacitor.

13. The method of claim 10, wherein reducing an uneven voltage distribution comprises, providing circuitry to discharge an overvoltage through at least one transistor, and providing circuitry to provide brief direct current flow through at least one of the plurality of voltage multiplier cells using at least one capacitor.

14. The method of claim 13, wherein the circuitry to discharge an overvoltage is provided for each of the plurality of voltage multiplier cells.

15. The method of claim 13, wherein the circuitry to provide direct brief current flow is provided for each of the plurality of voltage multiplier cells.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61712151 A

**Non-patent literature cited in the description**

- **P. FAVRAT ; P. DEVAL ; M.J. DECLERCQ.** A High-Efficiency CMOS Voltage Doubler. *IEEE Journal of Solid-State Circuits,* March 1998, vol. 33 (3
- **R. PELLICONI et al.** Power Efficient Charge Pump in Deep Submicron Standard CMOS Technology. *Proc. 27 ESSCIRC,* 2001
- **J. CHA.** Analysis and Design Techniques of CMOS Charge-Pump-Based Radio-Frequency Antenna-Switch Controllers. *IEEE Trans. On Circuits and Systems - I: Regular Papers,* May 2009, vol. 56 (5
- **M.D. KER ; S.L. CHEN ; C.S. TSAI.** Design of Charge Pump Circuit With Consideration of Gate-Oxide Reliability in Low-Voltage CMOS processes. *IEEE Journal of Solid-State Circuits,* May 2006, vol. 41 (5